# EUROPÄISCHE PATENTANMELDUNG

(11) **EP 2 385 341 A1**
(43) Veröffentlichungstag der Anmeldung: **09.11.2011**
(21) Anmeldenummer: 11003337.0
(22) Anmeldetag: 20.04.2011
(51) Int. Cl.: G01B 11/25

(54) **Verfahren und Vorrichtung zum Bestimmen der 3D-Koordinaten eines Objektes**

(30) Priorität: 03.05.2010 DE 102010018979
(71) Anmelder: Steinbichler Optotechnik GmbH, 83115 Neubeuern (DE)
(72) Erfinder: Steinbichler, Marcus, 83115 Neubeuern (DE); Kaupert, Bertram, 83080 Oberaudorf (DE)
(74) Vertreter: Zinnecker, Armin

(57) **Zusammenfassung**

Bei einem Verfahren zum Bestimmen der 3D-Koordinaten der Oberfläche (1) eines Objekts (2) wird die Oberfläche (1) des Objekts (2) von einem Scanner (3) zur Gewinnung von Objektdaten abgetastet. Die Position und Orientierung des Scanners (3) zur Gewinnung von Lagedaten wird bestimmt, insbesondere durch ein Tracking-System (4). Die Objektdaten und die Lagedaten werden an einen Controller (5) übermittelt, der daraus die 3D-Koordinaten der Oberfläche (1) des Objekts (2) bestimmt. Um ein derartiges Verfahren zu verbessern werden die Objektdaten von dem Scanner (3) drahtlos an den Controller (5) übermittelt (Fig. 1).

## Beschreibung

Die Erfindung betrifft ein Verfahren zum Bestimmen der 3D-Koordinaten der Oberfläche eines Objekts und eine Vorrichtung zur Durchführung eines derartigen Verfahrens.

Bei dem Verfahren wird die Oberfläche des Objekts von einem Scanner zur Gewinnung von Objektdaten abgetastet. Ein derartiger Scanner ist aus der EP 1 724 549 A2, auf die hiermit Bezug genommen wird, bekannt. Bei dem Scanner kann es sich insbesondere um einen Linienscanner handeln. Der Scanner kann eine Projektionseinrichtung zum Projizieren eines Musters auf das Objekt umfassen. Insbesondere projiziert die Projektionseinrichtung eine Linie auf das Objekt. Vorzugsweise wird das Muster bzw. die Linie mit kohärentem Licht, insbesondere Laserlicht, auf das Objekt projiziert. Der Scanner kann ferner eine Kamera umfassen, die geeignet ist, das auf das Objekt projizierte Muster, insbesondere die auf das Objekt projizierte Linie, zu erfassen. Die Kamera kann eine Abbildungsoptik und einen Sensor umfassen, insbesondere einen flächenhaften Sensor, insbesondere einen CCD-Sensor oder einen CMOS-Sensor oder einen sonstigen Sensor.

Die Objektdaten, die von dem Scanner aufgenommen werden, beziehen sich auf das Bezugsystem dieses Scanners. Es ist allerdings erforderlich, absolute 3D-Koordinaten der Oberfläche des Objekts zu erhalten, also 3D-Koordinaten der Oberfläche des Objekts, die in einem raumfesten Koordinatensystem vorliegen. Hierfür ist es erforderlich, die Position und Orientierung des Scanners zu bestimmen. Auf diese Weise können die Lagedaten des Scanners erhalten werden, die es ermöglichen, die in dem Koordinatensystem des Scanners vorliegenden Objektdaten in absolute 3D-Koordinaten der Oberfläche des Objekts umzurechnen.

Die Objektdaten und die Lagedaten werden an einen Controller übermittelt, der daraus die 3D-Koordinaten der Oberfläche des Objekts bestimmt. Diese 3D-Koordinaten sind absolute Koordinaten, also Koordinaten in einem raumfesten Bezugsystem.

Ein Verfahren nach dem Oberbegriff des Anspruchs 1 ist aus der EP 0 553 266 B1 bekannt. Dieses Verfahren kann insbesondere bei der Prüfung der Maßhaltigkeit von Bauteilen eingesetzt werden, beispielsweise bei der Fertigung und Überwachung von Preßwerkzeugen zur Herstellung von Karosserieblechen von Fahrzeugen. Es wird von Automobilherstellern, im Flugzeugbau und im Consumerbereich eingesetzt.

Bisher werden die Objektdaten von dem Scanner durch eine Leitung, insbesondere eine elektrische oder optische Leitung, an den Controller übermittelt. Hierfür können mehradrige Kabel verwendet werden, beispielsweise ein bis zu 36-adriges Kabel, das die Verbindung zwischen dem Scanner und dem Controller herstellt. Ein derartiges Kabel ist mit verschiedenen Nachteilen behaftet. Es kann sich im Meßaufbau verhaken, es kann sich verdrillen, und es kann eine Stolpergefahr für den Bediener darstellen. Bei empfindlichen Objektoberflächen, beispielsweise von Clay-Modellen, kann es vorkommen, daß das Kabel beim Messen die Oberfläche berührt und durch Abdrücke beschädigt. Auch die begrenzte Länge des Kabels von beispielsweise 10 m kann insbesondere die Vermessung von großen Objekten in einem Stück verhindern und es erforderlich machen, das Objekt oder das komplette Meßgerät umsetzen zu müssen. Kabel sind empfindlich gegenüber kleinen Biegeradien und Knick- oder Druckstellen, wodurch in hochbeanspruchten Bereichen Unterbrechungen der Kabelschirmung oder sogar einzelner Litzen auftreten können.

Aufgabe der Erfindung ist es, ein verbessertes Verfahren und eine verbesserte Vorrichtung der eingangs angegebenen Art vorzuschlagen.

Erfindungsgemäß wird diese Aufgabe bei einem Verfahren zum Bestimmen der 3D-Koordinaten der Oberfläche eines Objekts durch die Merkmale des Anspruchs 1 gelöst. Die Objektdaten werden von dem Scanner drahtlos an den Controller übermittelt. Hierdurch wird die Durchführung des Verfahrens vereinfacht. Die mit einem Kabel verbundenen Nachteile treten nicht auf. Insbesondere kann auch das auf das Kabel entfallende Gewicht des Scanners eingespart werden. Die drahtlose Übermittlung der Objektdaten kann durch Funkwellen oder durch eine optische Übertragung erfolgen, insbesondere durch Infrarotstrahlung.

Vorteilhafte Weiterbildungen sind in den Unteransprüchen beschrieben.

Vorteilhaft ist es, wenn die Objektdaten und die Lagedaten miteinander synchronisiert werden. Um die 3D-Koordinaten der Oberfläche des Objekts mit einer ausreichenden Präzision bestimmen zu können, ist es erforderlich, daß die 3D-Koordinaten aus Objektdaten und Lagedaten errechnet werden, die jeweils zur selben Zeit bestimmt worden sind. Die zeitliche Abweichung dieser Daten voneinander darf eine bestimmte Grenze nicht überschreiten, um eine hinreichende Präzision der daraus bestimmten 3D-Koordinaten zu gewährleisten. Ein zeitlicher Versatz von nur wenigen Mikrosekunden kann bereits einen spürbaren Datenversatz bewirken, der zu wesentlich verschlechterten oder unbrauchbaren Meßdaten führen kann.

Vorteilhaft ist es, wenn die Objektdaten und die Lagedaten durch eine drahtlose Übertragung synchronisiert werden. Vorzugsweise werden die Objektdaten und die Lagedaten wiederkehrend synchronisiert, vorzugsweise regelmäßig wiederkehrend. Die drahtlose Übertragung kann durch Funkwellen oder durch eine optische Übertragung erfolgen, insbesondere durch Infrarotstrahlung. Für die drahtlose Übertragung der Synchronisation kann ein gesonderter Übertragungskanal verwendet werden.

Eine weitere vorteilhafte Weiterbildung ist dadurch gekennzeichnet, daß der Controller und/oder der Scanner ein Synchronisationssignal erzeugt, das an den Controller und/oder den Scanner drahtlos übertragen wird. Das Synchronisationssignal kann also von dem Controller erzeugt werden, der es an den Scanner drahtlos überträgt. Stattdessen oder zusätzlich kann das Synchronisationssignal von dem Scanner erzeugt werden, der es an den Controller drahtlos überträgt. Insbesondere kann in dem Controller ein Taktgeber integriert sein, der drahtlos einen vorzugsweise hochauflösenden Zeitgeber (Timer) synchronisiert, der in dem Scanner vorgesehen ist. Durch die Synchronisation kann ein gemeinsamer Startzeitpunkt für die Aufnahme und/oder Übermittlung der Objektdaten und die Aufnahme und/oder Übermittlung der zugehörigen Lagedaten festgelegt werden. Dies kann durch Einschalten und/oder Ausschalten des Signals des Taktgebers (Taktsignals) und/oder durch ein gesondertes Signal eines Triggers (Triggersignal) bewirkt werden.

Vorteilhaft ist es, wenn die Objektdaten vor der drahtlosen Übermittlung an den Controller komprimiert werden. Da die Übermittlung der Objektdaten von dem Scanner an den Controller drahtlos erfolgt, ist die Datenübertragungsrate im Verhältnis zu einer Übermittlung durch eine Leitung begrenzt. Bei einer leitungsgebundenen Übermittlung ist es insbesondere möglich, mehrere parallele Leitungen zu verwenden, wodurch die Datenübertragungskapazität gesteigert werden kann. Dementsprechend kann es vorteilhaft oder erforderlich sein, die Objektdaten zu komprimieren und dadurch die zu übertragende Datenmenge zu reduzieren.

Die Reduzierung der Datenmenge kann in dem Scanner erfolgen oder in einer in dem Scanner vorhandenen Signalaufbereitungseinheit. Die Reduktion der zu übertragenden Datenmenge kann in der Weise erfolgen, daß aus den gemessenen Rohdaten die Nutzdaten extrahiert werden. Bei den Nutzdaten kann es sich insbesondere um die Koordinaten der Punkte auf dem flächenhaften Sensor handeln, die den Punkten der auf das Objekt projizierten Linie entsprechen.

Der Scanner kann Bestandteil einer Koordinatenmeßmaschine sein. In diesem Fall liefert die stationäre Koordinatenmeßmaschine die Lagedaten für die Position des Scanners. Der Scanner kann in der Koordinatenmeßmaschine in drei Achsen gelagert und verfahrbar sein. Die Koordinatenmeßmaschine kann die Koordinaten der Position des Scanners übermitteln. Der Scanner kann ferner verschwenkbar sein. In diesem Fall ist es vorteilhaft, wenn die Koordinatenmeßmaschine auch die Daten der durch die Verschwenkung bestimmten Orientierung des Scanners überträgt. Es ist allerdings auch möglich, daß der Scanner starr, also nicht verschwenkbar, an der Koordinatenmeßmaschine befestigt ist. In diesem Fall wird die Orientierung des Scanners durch dessen fest eingebaute Orientierung bestimmt.

Der Scanner kann an einem Gelenkarm oder an einem Arm eines Industrieroboters vorgesehen sein. Bei dem Gelenkarm kann es sich um einen von Hand geführten Gelenkarm handeln. Es ist allerdings auch möglich, daß der Gelenkarm von einem oder mehreren Motoren, insbesondere Elektromotoren, angetrieben wird. In allen Fällen werden die Lagedaten für die Position und Orientierung des Scanners aus den Winkeln der Gelenke und den Längen der Arme des Gelenkarms oder des Industrieroboters bestimmt.

Besonders vorteilhaft ist es, wenn der Scanner ein handgehaltener Scanner ist. In diesem Fall ist es vorteilhaft, wenn die Position und Orientierung des Scanners durch ein Tracking-System bestimmt werden. Beispiele für derartige Tracking-Systeme sind in der EP 0 553 266 B1 und in der EP 1 724 549 A2 beschrieben, auf die hiermit Bezug genommen wird.

Eine weitere vorteilhafte Weiterbildung ist dadurch gekennzeichnet, daß die Energieversorgung des Scanners durch eine am Körper tragbare Energieversorgungseinheit erfolgt. Vorzugsweise umfaßt die Energieversorgungseinheit Batterien und/oder Akkus. Die Energieversorgungseinheit kann auch weitere Vorrichtungen mit Energie versorgen, insbesondere einen Sender für die drahtlose Übermittlung der Objektdaten an den Controller.

Nach einer weiteren vorteilhaften Weiterbildung werden Fehler bei der Übermittlung der Objektdaten automatisch erkannt und behoben. Hierdurch kann verhindert werden, daß beispielsweise durch Störsignale aus der Umgebung nicht oder nicht korrekt erfaßte oder übermittelte Objektdaten mit einem entsprechenden Zusatzaufwand und entsprechenden Zusatzkosten erneut aufgenommen werden müssen. Ferner gibt es Fälle, in denen Messungen nicht wiederholbar sind, weil das Meßobjekt oder das Meßgerät nicht mehr zur Verfügung stehen. Fehler können insbesondere dadurch behoben werden, daß nicht oder nicht richtig übermittelte Daten oder Datenpakete erneut übermittelt werden.

Die erfindungsgemäße Vorrichtung zum Bestimmen der 3D-Koordinaten der Oberfläche eines Objekts, insbesondere zur Durchführung des erfindungsgemäßen Verfahrens, umfaßt einen Scanner zur Gewinnung von Objektdaten der Oberfläche des Objekts, eine Vorrichtung zum Bestimmen der Position und Orientierung des Scanners zur Gewinnung von Lagedaten und einen Controller zum Bestimmen der 3D-Koordinaten der Oberfläche des Objekts aus den Objektdaten und den Lagedaten. Erfindungsgemäß umfaßt die Vorrichtung eine Übermittlungseinrichtung zum drahtlosen Übermitteln der Objektdaten von dem 3D-Meßgerät an den Controller.

Vorteilhaft ist es, wenn die Vorrichtung eine Synchronisationseinrichtung zum Synchronisieren der Objektdaten mit den Lagedaten und/oder eine drahtlose Übertragungseinrichtung für die Synchronisationseinrichtung und/oder eine Signalaufbereitungseinrichtung zum Komprimieren der Objektdaten vor der drahtlosen Übermittlung an den Controller und/oder einen handgehaltenen Scanner und/oder ein Tracking-System zum Bestimmen der Position und Orientierung des Scanners und/oder eine am Körper tragbare Energieversorgungseinheit zur Energieversorgung des Scanners und/oder eine Fehlerbeseitigungseinrichtung zum automatischen Erkennen und Beheben von Fehlern bei der Übermittlung der Objektdaten umfaßt.

Die Erfindung betrifft ferner eine Koordinatenmeßmaschine oder einen Gelenkarm oder einen Industrieroboter, die durch eine erfindungsgemäße Vorrichtung gekennzeichnet sind.

Ein Ausführungsbeispiel der Erfindung wird nachstehend anhand der beigefügten Zeichnung im einzelnen erläutert. In der Zeichnung zeigt
- Fig. 1: eine Vorrichtung zum Bestimmen der 3D-Koordinaten der Oberfläche eines Objekts in einer schematischen, perspektivischen Ansicht,
- Fig. 2: den Scanner gemäß Fig. 1 in einer schematischen, perspektivischen Ansicht,
- Fig. 3: den CMOS-Sensor des Scanners gemäß Fig. 2 in einer vergrößerten Ansicht,
- Fig. 4: den Intensitätsverlauf längs der gestrichelt gezeichneten Spalte des CMOS-Sensors in Fig. 3 und
- Fig. 5: einen Signalverlauf der Objektdaten, der Lagedaten und des Synchronisationssignals.

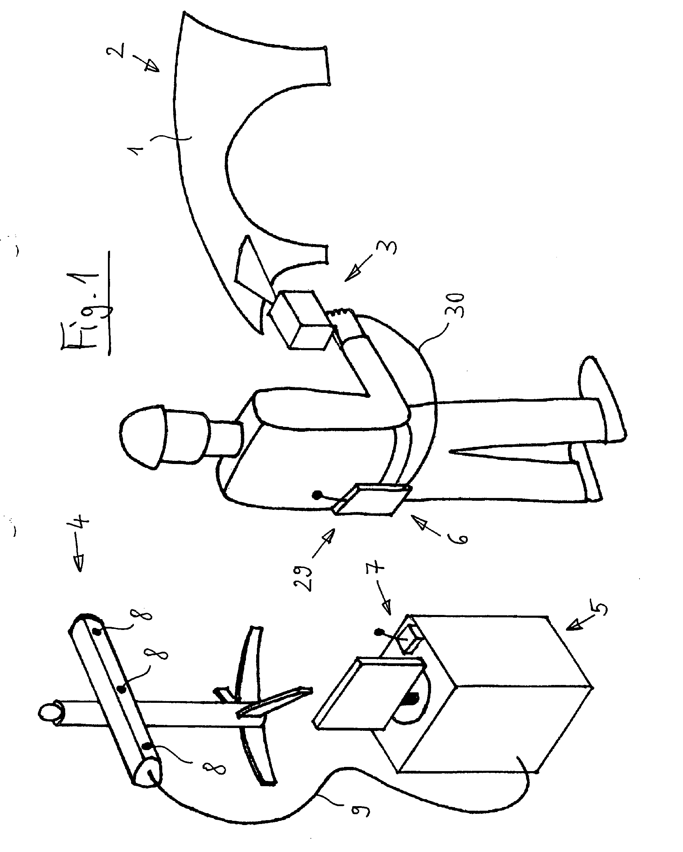

Die in Fig. 1 gezeigte Vorrichtung zum Bestimmen der 3D-Koordinaten der Oberfläche 1 eines Objekts 2, nämlich eines Kotflügels eines Kraftfahrzeugs, umfaßt einen Scanner 3 zur Gewinnung von Objektdaten der Oberfläche 1 des Objekts 2, ein Tracking-System 4 zum Bestimmen der Position und Orientierung des Scanners 3 und zum Gewinnen der Lagedaten des Scanners 3 und einen Controller 5 zum Bestimmen der 3D-Koordinaten der Oberfläche 1 des Objekts 2 aus den Objektdaten und den Lagedaten. Die Vorrichtung umfaßt ferner eine Übermittlungseinrichtung zum drahtlosen Übermitteln der Objektdaten von dem Scanner 3 an den Controller 5, die einen Sender/Empfänger 6 und einen Sender/Empfänger 7 umfaßt. Zwischen den Sendern/Empfängern 6, 7 findet eine bidirektionale Datenübertragung statt. Der Sender/Empfänger 7 des Controllers 5 sendet Kommandos an den Scanner 3.

An dem Scanner 3 sind mehrere Detektoren, insbesondere IR-Detektoren (Infrarot-Detektoren), angeordnet (in der Zeichnung nicht dargestellt), deren Position von dem Tracking-System 4 bestimmt wird. Aus den Positionen der IR-Detektoren ermittelt das Tracking-System 4 die Position und Orientierung des Scanners 3. Hierzu umfaßt das Tracking-System 4 drei IR-Sensoren (Infrarot-Sensoren) 8, die jeweils eine Optik und einen CCD-Sensor umfassen. Die IR-Detektoren des Scanners 3 werden abwechselnd angesteuert und aktiviert, so daß deren Signale von den IR-Sensoren 8 aufgenommen werden, woraus das Tracking-System 4 die jeweilige Position des jeweils angesteuerten IR-Detektors ermittelt. Das Tracking-System 4 bestimmt daraus die Position und Orientierung des Scanners 3 und übermittelt diese Lagedaten des Scanners 3 über die Leitung 9 an den Controller 5. Es ist allerdings auch möglich, daß die Lagedaten des Scanners 3 von dem Controller 5 bestimmt werden. Der Controller 5 umfaßt ein Datenverarbeitungsgerät, insbesondere einen PC.

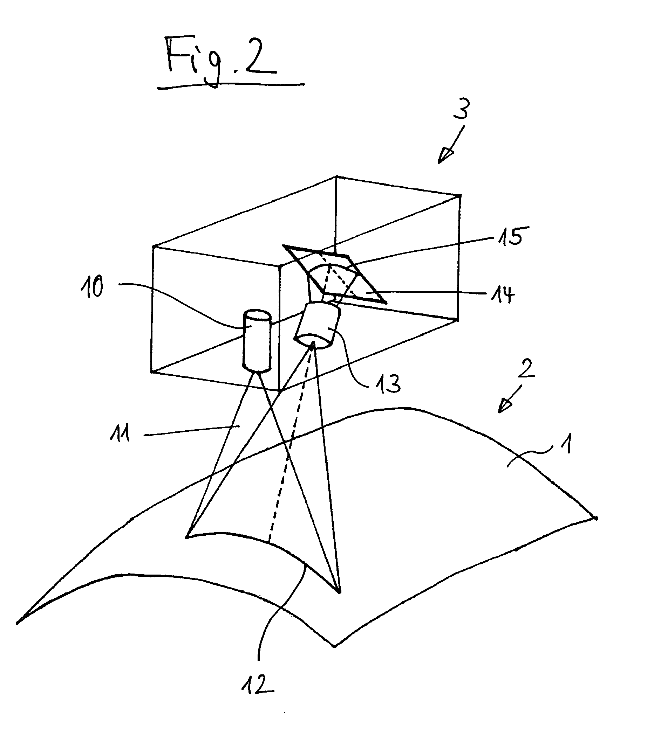

In Fig. 2 ist der Scanner 3 im einzelnen dargestellt. Er umfaßt einen Projektor 10, der eine Laserlichtquelle und eine Linienoptik aufweist. Der Projektor 10 wirft einen flächenhaften Lichtkegel 11 auf die Oberfläche 1 des Objekts 2, auf der hierdurch eine Projektionslinie 12 erzeugt wird.

Diese Projektionslinie 12 wird von einer Kamera 13 des Scanners 3 aufgenommen, die eine Kameraoptik und einen CMOS-Sensor 14 umfaßt, welcher in Fig. 2 übertrieben groß dargestellt ist. Die Projektionslinie 12 wird in der Kamera 13 auf den CMOS-Sensor 14 als Sensorlinie 15 abgebildet. Die Daten des CMOS-Sensors 14 bilden die Objektdaten.

Der handgehaltene Scanner 3 wird entlang dem Objekt 2 bewegt. Auf diese Weise überstreicht die Projektionslinie 12 die Oberfläche 1 des Objekts 2. Dabei entstehen Datensätze, die der jeweiligen Position des Scanners 3 zu einem bestimmten Zeitpunkt zugeordnet sind. Der Datensatz für eine bestimmte Position des Scanners 3 zu einem bestimmten Zeitpunkt umfaßt die Sensorlinie 15, die zu der zu diesem Zeitpunkt aufgenommenen Projektionslinie 12 gehört, und die Position und Orientierung des Scanners 3 zu diesem Zeitpunkt, die von dem Tracking-System 4 bestimmt werden. Aus diesem Datensatz können die 3D-Koordi-naten der Projektionslinie 12 auf der Oberfläche 1 des Objekts 2 bestimmt werden. Durch eine Wiederholung dieses Vorgangs und die Verarbeitung einer Vielzahl von Datensätzen für andere Positionen des Scanners 3 zu anderen Zeitpunkten können die 3D-Koordinaten für eine Vielzahl von Projektionslinien 12 und damit für die gesamte Oberfläche 1 des Objekts 2 bestimmt werden.

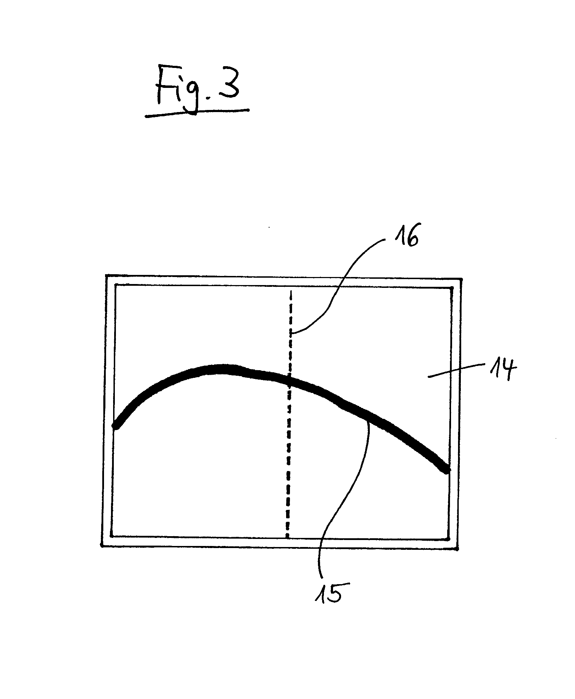

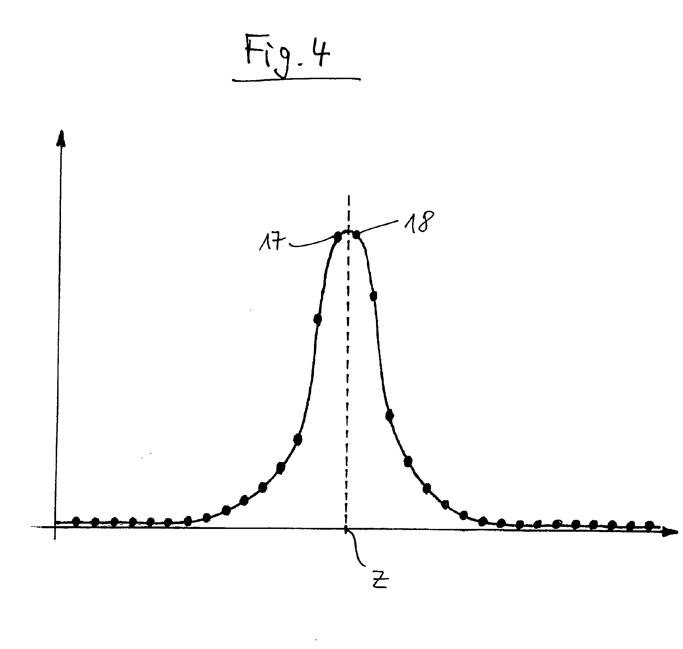

In dem Scanner 3 werden die Objektdaten vor der drahtlosen Übermittlung an den Controller 5 komprimiert. Ein mögliches Komprimierungsverfahren wird nachfolgend anhand der Fig. 3 und 4 erläutert. Bei diesem Verfahren werden die Pixel des CMOS-Sensors 14 spaltenweise ausgewertet. Die gestrichelte Linie 16 symbolisiert die Spalte des CMOS-Sensors 14, die gerade ausgewertet wird. Diese Linie 16 wird von oben nach unten durchlaufen. Dabei werden die Pixel der zugehörigen Spalte des CMOS-Sensors ausgelesen. Die Intensitäten der ausgelesenen Werte sind in Fig. 4 dargestellt, in der auf der horizontalen Achse der Abstand von der oberen Kante des CMOS-Sensors 14 und auf der vertikalen Achse die von dem jeweiligen Pixel gemessene Intensität aufgetragen sind. Beginnend an der oberen Kante des CMOS-Sensors 14 werden zunächst Meßwerte mit einer niedrigen Intensität ausgelesen. Die im folgenden erreichten maximalen Intensitätswerte 17, 18 zeigen die Lage des auf der Linie 16 liegenden Punktes der Sensorlinie 15 an. Auf diese Weise kann die Zeilenkoordinate z der Sensorlinie 15 bestimmt werden, die zu der Spaltenkoordinate der Linie 16 gehört. Dieses Verfahren wird nacheinander für alle Spalten des CMOS-Sensors 14 durchgeführt. Auf diese Weise werden die Koordinaten der Sensorlinie 15 erhalten. Diese Koordinaten werden dann drahtlos an den Controller 5 übertragen. Die Komprimierung der Objektdaten besteht darin, daß nicht sämtliche Intensitätsdaten aller Pixel des CMOS-Sensors 15 übertragen werden müssen, sondern nur die Daten der Koordinaten der Sensorlinie 15.

Zum Bestimmen der 3D-Koordinaten der Oberfläche 1 des Objekts 2 kann es wünschenswert oder erforderlich sein, die Objektdaten und die Lagedaten miteinander zu synchronisieren. Dies erfolgt durch eine drahtlose Übertragung. Der Controller 5 erzeugt ein Synchronisationssignal, das durch den Sender/Empfänger 7 des Controllers 5 an den Sender/Empfänger 6 des Scanners 3 übertragen wird.

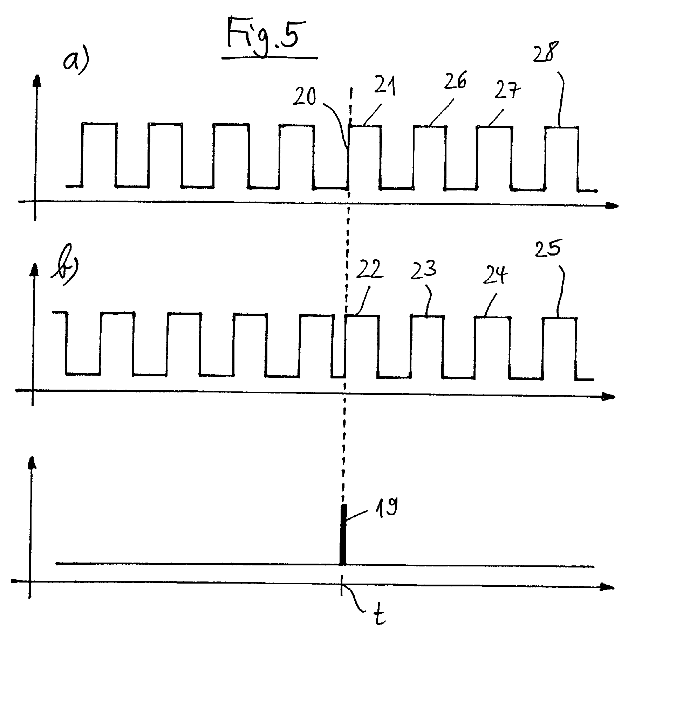

Das Verfahren der Synchronisation ist in Fig. 5 schematisch dargestellt. Fig. 5a zeigt den zeitlichen Verlauf der Übermittlung von Lagedaten, also von Daten der Position und Orientierung des Scanners 3, an den Controller 5. Fig. 5b zeigt den zeitlichen Verlauf der drahtlosen Übermittlung von Objektdaten von dem Scanner 3 an den Controller 5. Diese Datenübertragungen sind nicht miteinander synchron. Zu einem bestimmten Zeitpunkt t wird von einem Taktgeber in dem Controller 5 ein Synchronisationssignal 19 erzeugt. Das Synchronisationssignal 19 wird drahtlos an den Scanner 3 übertragen. Hierfür kann ein gesonderter Datenübertragungskanal vorgesehen sein. Der Zeitpunkt t stimmt mit dem Zeitpunkt der ansteigenden Flanke 20 der Übermittlung eines Pakets 21 von Lagedaten überein. Die Übertragung des Synchronisationssignals 19 an den Scanner 3 bewirkt, daß auch die Übertragung des nächsten Datenpakets 22 von Objektdaten zu dem Zeitpunkt der Übertragung des Synchronisationssignals 19 beginnt. Ferner bewirkt der Synchronisationsimpuls 19, daß ein in dem Scanner 3 vorhandener Zeitgeber zurückgesetzt wird. Dieser Zeitgeber läuft mit derselben Geschwindigkeit wie ein entsprechender Zeitgeber des Controllers 5. Er taktet die Übertragung der nachfolgenden Datenpakete 23, 24, 25 der Objektdaten zu den gleichen Zeitpunkten wie der Zeitgeber des Controllers 5 die nachfolgenden Datenpakete 26, 27, 28 der Lagedaten. Dies ist in Fig. 5 rechts des Zeitpunkts t dargestellt.

Nach der Übertragung einer bestimmten Anzahl von Datenpaketen können die Objektdaten und die Lagedaten erneut asynchron werden, insbesondere aufgrund von kleinen Abweichungen der Geschwindigkeiten der Zeitgeber des Scanners 3 und des Controllers 5. Die Datenübertragung kann dann durch ein weiteres Synchronisationssignal wieder synchronisiert werden. Vorzugsweise werden zu bestimmten, regelmäßig wiederkehrenden Zeitpunkten Synchronisationssignale gesendet.

Die Energieversorgung für den Scanner 3 und für den Sender/Empfänger 6 ist in einer am Körper tragbaren Energieversorgungseinheit 29 vorgesehen. Sie umfaßt eine oder mehrere Hochleistungsbatterien. Die Energieversorgungseinheit 29 ist mit dem Scanner 3 durch eine Leitung 30 verbunden.

## Patentansprüche

1. Verfahren zum Bestimmen der 3D-Koordinaten der Oberfläche (1) eines Objekts (2),
bei dem die Oberfläche (1) des Objekts (2) von einem Scanner (3) zur Gewinnung von Objektdaten abgetastet wird,
bei dem die Position und Orientierung des Scanners (3) zur Gewinnung von Lagedaten bestimmt wird
und bei dem die Objektdaten und die Lagedaten an einen Controller (5) übermittelt werden, der daraus die 3D-Koordinaten der Oberfläche (1) des Objekts (2) bestimmt,
**dadurch gekennzeichnet,**
**daß** die Objektdaten von dem Scanner (3) drahtlos an den Controller (5) übermittelt (6, 7) werden.

2. Verfahren nach Anspruch 1, **dadurch gekennzeichnet, daß** die Objektdaten und die Lagedaten miteinander synchronisiert werden.

3. Verfahren nach Anspruch 2, **dadurch gekennzeichnet, daß** die Objektdaten und die Lagedaten durch eine drahtlose Übertragung synchronisiert werden.

4. Verfahren nach Anspruch 2 oder 3, **dadurch gekennzeichnet, daß** der Controller (5) und/oder der Scanner (3) ein Synchronisationssignal (19) erzeugt, das an den Controller (5) und/oder den Scanner (3) drahtlos übertragen wird.

5. Verfahren nach einem der vorhergehenden Ansprüche, **dadurch gekennzeichnet, daß** die Objektdaten vor der drahtlosen Übermittlung an den Controller (5) komprimiert werden.

6. Verfahren nach einem der vorhergehenden Ansprüche, **dadurch gekennzeichnet, daß** der Scanner (3) Bestandteil einer Koordinatenmeßmaschine ist.

7. Verfahren nach einem der Ansprüche 1 - 5, **dadurch gekennzeichnet, daß** der Scanner (3) an einem Gelenkarm oder an einem Arm eines Industrieroboters vorgesehen ist.

8. Verfahren nach einem Ansprüche 1 - 5, **dadurch gekennzeichnet, daß** der Scanner (3) ein handgehaltener Scanner (3) ist.

9. Verfahren nach Anspruch 8, **dadurch gekennzeichnet, daß** die Position und Orientierung des Scanners (3) durch ein Tracking-System (4) bestimmt werden.

10. Verfahren nach einem der vorhergehenden Ansprüche, **dadurch gekennzeichnet, daß** die Energieversorgung des Scanners (3) durch eine am Körper tragbare Energieversorgungseinheit (29) erfolgt.

11. Verfahren nach einem der vorhergehenden Ansprüche, **dadurch gekennzeichnet, daß** Fehler bei der Übermittlung der Objektdaten automatisch erkannt und behoben werden.

12. Vorrichtung zum Bestimmen der 3D-Koordinaten der Oberfläche eines Objekts, insbesondere zur Durchführung des Verfahrens nach einem der vorhergehenden Ansprüche, umfassend
einen Scanner (3) zur Gewinnung von Objektdaten der Oberfläche (1) des Objekts (2),
eine Vorrichtung zum Bestimmen der Position und Orientierung des Scanners (3) zur Gewinnung von Lagedaten
und einen Controller (5) zum Bestimmen der 3D-Koordinaten der Oberfläche (1) des Objekts (2) aus den Objektdaten und den Lagedaten,
**gekennzeichnet durch**
eine Übermittlungseinrichtung (6, 7) zum drahtlosen Übermitteln der Objektdaten von dem Scanner (3) an den Controller (5).

13. Vorrichtung nach Anspruch 12, **gekennzeichnet durch** eine Synchronisationseinrichtung zum Synchronisieren der Objektdaten mit den Lagedaten und/oder eine drahtlose Übertragungseinrichtung für die Synchronisationseinrichtung und/oder eine Signalaufbereitungseinrichtung zum Komprimieren der Objektdaten vor der drahtlosen Übermittlung an den Controller (5) und/oder einen handgehaltenen Scanner (3) und/oder ein Tracking-System (4) zum Bestimmen der Position und Orientierung des Scanners (3) und/oder eine am Körper tragbare Energieversorgungseinheit (29) zur Energieversorgung des Scanners (3) und/oder eine Fehlerbeseitigungseinrichtung zum automatischen Erkennen und Beheben von Fehlern bei der Übermittlung der Objektdaten.

14. Koordinatenmeßmaschine oder Gelenkarm oder Industrieroboter, **gekennzeichnet durch** eine Vorrichtung nach Anspruch 12 oder 13.
